# EUROPÄISCHE PATENTSCHRIFT

(11) **EP 1 747 365 B1**
(45) Veröffentlichungstag und Bekanntmachung des Hinweises auf die Patenterteilung: **06.10.2010**
(21) Anmeldenummer: 05743095.1
(22) Anmeldetag: 13.05.2005
(51) Int. Cl.: F02D 7/02, F03D 9/00, F03D 9/02

(54) **WINDENERGIEANLAGE MIT EINEM HILFSGENERATOR UND VERFAHREN ZU DEREN STEUERUNG**
WIND POWER INSTALLATION HAVING AN AUXILIARY GENERATOR AND METHOD FOR THE CONTROL THEREOF
INSTALLATION EOLIENNE POURVUE D'UN GENERATEUR AUXILIAIRE, ET SON PROCEDE DE COMMANDE

(30) Priorität: 18.05.2004 DE 102004024563
(43) Veröffentlichungstag der Anmeldung: 31.01.2007
(73) Patentinhaber: NORDEX Energy GmbH, 22848 Norderstedt (DE)
(72) Erfinder: VOSS, Eberhard, 18233 Jörnstorf (DE)
(74) Vertreter: Hauck Patent- und Rechtsanwälte
(86) Internationale Anmeldenummer: PCT/EP2005/005267
(87) Internationale Veröffentlichungsnummer: WO 2005/113964

(56) Entgegenhaltungen:
- DE-B1- 2 742 559
- DE-U1- 20 020 232

## Beschreibung

Die vorliegende Erfindung betrifft eine Windenergieanlage mit einem Rotor und einem Generator, der von dem Rotor angetrieben elektrische Energie erzeugt. Mindestens ein Rotorblatt ist in einer Rotornabe um seine Längsachse verstellbar gelagert. Die Windenergieanlage besitzt einen Hilfsgenerator, der von dem Rotor angetrieben elektrische Energie für mindestens einen Verbraucher erzeugt.

Aus DE 102 33 589 A1 ist eine Windenergieanlage mit einem mehrstufigen Generator bekannt. Bei der Windenergieanlage sind unterschiedliche Generatorstufen für unterschiedliche Windgeschwindigkeiten vorgesehen, die wahlweise zugeschaltet oder getrennt werden. Durch die mehreren Generatorstufen soll ein breiter Bereich von unterschiedlichen Windstärken effektiv zur Stromerzeugung genutzt werden.

Aus DE 196 44 705 ist eine Verstellvorrichtung für die Rotorblätter bekannt. Bei der Verstellung der Rotorblätter werden diese in eine Querstellung gebracht, die sogenannte Fahnenstellung, bei der die Windenergieanlage zum Stillstand kommt. Die Verstellvorrichtung besitzt einen Hilfsgenerator, der im festen Verbund mit Turmkopf/Rotor installiert ist und die Energie aus der Drehbewegung des Rotors relativ zum Turmkopf gewinnt. Mit der so gewonnenen Energie werden die Rotorblätter direkt in die Fahnenstellung gedreht.

Aus DE 100 09 472 C2 ist eine Vorrichtung zum Verstellen des Anstellwinkels der Rotorblätter mit einem Notstromkreis bekannt. Der Notstromkreis besitzt einen Permanentmagnetgenerator, der mit den Motoren zum Verstellen des Anstellwinkels derart verschaltet ist, dass diese nach einem Zuschalten des Notstromkreises in die Fahnenstellung gestellt werden. Hierbei wird bei hohen Drehzahlen der Rotorwelle auch eine große Verfahrgeschwindigkeit der Rotorblätter erzielt.

Aus DE 101 53 644 C2 ist eine Windenergieanlage mit einer berührungslosen Energieübertragung von einem feststehenden Teil der Windenergieanlage auf den Rotor bekannt. Hierzu wird eine Asynchronmaschine, deren Ständer mit dem feststehenden Teil der Windenergieanlage verbunden und deren Läufer an dem drehenden Teil angeordnet ist, in die Windenergieanlage integriert.

Aus DE 368 799 ist eine Regelvorrichtung für eine Windenergieanlage bekannt, bei der ein selbsterregter und ein fremderregter Generator zusammen mit Akkumulatoren betrieben werden, derart, dass die Spannung selbsttätig gehalten und ein schwankender Strombedarf der angeschlossenen Verbraucher abgedeckt wird.

Aus EP 1 286 049 A2 ist eine Windenergieanlage mit einer Stabilisierungseinrichtung bekannt, die den Rotor in einer lastarmen Drehstellung (Parkposition) aktiv stabilisiert. Zusätzlich ist eine eigene Energieversorgungseinrichtung, insbesondere in Form einer Hilfs-Windenergieanlage, bekannt, die an dem Maschinenhaus der Windenergieanlage montiert ist.

Aus DE 27 42 559 ist eine Windenergieanlage bekannt, bei der auf dem Mast eine Hilfsturbine angeordnet ist, die eine Einrichtung zum Übertragen der von ihr erzeugten elektrischen oder hydraulischen Energie auf eine Rotorblattverstelleinrichtung und auf die Schwenkvorrichtung der Windenergieanlage aufweist. Hierzu sieht die Hilfsturbine entweder einen eigenen Generator vor, der die elektrische Energie erzeugt, oder eine eigene Ölpumpe, die einen geeigneten Druck für eine Hydraulikflüssigkeit erzeugt.

Moderne Windenergieanlagen weisen häufig eine Verstelleinrichtung auf, den sogenannten Pitchantrieb, der das Rotorblatt um seine Längsachse verstellen kann, wodurch eine Anpassung an unterschiedliche Windgeschwindigkeiten ermöglicht wird.

Wenn es notwendig wird, eine solche Windenergieanlage abzuschalten, werden die Rotorblätter über die Pitchantriebe in ihre Fahnenstellung gebracht, das heißt die Rotorblätter stehen im Wesentlichen quer (90°) zur normalen Ausrichtung. In dieser Stellung kann der Rotor durch eine Feststellbremse oder eine andere Stabilisierungseinrichtung dauerhaft im Stillstand gehalten werden. Jedoch wird der Rotor häufig nicht durch eine Bremse im Stillstand gehalten, sondern der Rotor trudelt im Wind, das heißt, er dreht sich und dadurch auch der mit dem Rotor verbundene Antriebsstrang einschließlich des Generators, wobei der Generator vom Netz getrennt ist. Dieser Zustand wird als Trudelbetrieb bezeichnet. Dabei stellt sich je nach Windgeschwindigkeit und Windrichtung eine ungleichmäßige Drehzahl von wenigen Umdrehungen pro Minute ein, wogegen die Drehzahl im Normalbetrieb der Windenergieanlage wesentlich höher, beispielsweise im Bereich von 15-20 Umdrehungen pro Minute liegt.

Es wird allgemein verlangt, dass die Rotorblätter auch bei Ausfall der Stromversorgung in die Fahnenstellung gestellt werden können. Dazu sind meist Energiespeicher, beispielsweise Akkumulatoren oder Kondensatoren bei elektrischen Pitchantrieben und Druckspeicher bei hydraulischen Pitchantrieben vorgesehen, aus denen die zum einmaligen Verstellen der Rotorblätter in die Fahnenstellung notwendige Energie entnommen wird. Die Energiespeicher sind häufig so dimensioniert, dass diese nach dem einmaligen Verstellvorgang erschöpft sind und erst bei Wiederaufnahme des normalen Betriebs wieder aufgeladen werden. DE 200 20 232 U1 schlägt die Verwendung eines Hilfsgenerators vor, um die Rotorblätter sicher in die Fahnenstellung zu drehen.

Zur vorübergehenden Versorgung der Steuerung der Windenergieanlage bei Netzausfall ist gewöhnlich eine handelsübliche, unterbrechungsfreie Stromversorgung (USV) auf der Basis von Akkumulatoren vorhanden, diese ist dazu ausgelegt, die Steuerung der Windenergieanlage für kurze Zeit mit Strom zu versorgen, sodass beispielsweise über eine Fernüberwachung eine Meldung abgesetzt werden kann, dass das Betriebssystem ordnungsgemäß heruntergefahren und/oder die Steuerung abgeschaltet ist.

Bei Windenergieanlagen auf See (off-shore) wird verlangt, dass die Windenergieanlage auch bei einem längeren Ausfall des Stromnetzes von mehreren Tagen oder Wochen in der Lage ist, wesentliche Komponenten mit Notstrom zu versorgen. Dazu ist gewöhnlich ein Dieselgenerator vorgesehen, der mit einer entsprechend großen Menge Diesel versorgt werden muß. Zum Erhalt eines einwandfreien Zustandes des Diesels und des Dieselgenerators ist ein erheblicher Wartungsaufwand notwendig, unter anderem muß der Diesel kontinuierlich oder zumindest regelmäßig umgewälzt und in bestimmten Abständen ausgetauscht werden. Der Aufwand hierfür ist erheblich, außerdem führt der Umgang mit Dieselkraftstoff auf See zu einer Gefährdung der Umwelt.

Der vorliegenden Erfindung liegt die Aufgabe zugrunde, bei Netzausfall eine Notversorgung bereitzustellen, die mit geringem Aufwand herstellbar ist, im Normalbetrieb wenig Wartung erfordert und keine Gefahr für die Umwelt darstellt.

Erfindungsgemäß wird die Aufgabe durch eine Windenergieanlage mit den Merkmalen aus Anspruch 1 gelöst. Vorteilhafte Ausgestaltungen der Windenergieanlage bilden die Gegenstände der Unteransprüche. Ebenfalls wird die Aufgabe durch das Steuerverfahren gemäß Anspruch 21 gelöst.

Die erfindungsgemäße Windenergieanlage besitzt einen Rotor und einen von diesem angetriebenen Generator, der elektrische Energie erzeugt, die insbesondere zur Einspeisung in ein Netz vorgesehen ist. Mindestens ein Rotorblatt ist in einer Rotornabe drehbar um seine Längsachse gelagert. Ein Hilfsgenerator, der von dem Rotor angetrieben elektrische Energie für mindestens einen Verbraucher erzeugt, ist weiterhin vorgesehen. Erfindungsgemäß ist der über ein Getriebe mit dem Rotor gekoppelte Hilfsgenerator für eine Drehzahl des Rotors ausgelegt, die sich für ein in die Fahnenstellung gestelltes Rotorblatt einstellt. Diese Drehzahl ist kleiner als die Drehzahl im Normalbetrieb. Insbesondere bei der Drehzahl im Trudelbetrieb erzeugt der Hilfsgenerator elektrische Energie für den oder die Verbraucher. Der Erfindung liegt die Erkenntnis zugrunde, dass beim Trudeln der Windenergieanlage die vorhandene geringe Drehzahl zum Betrieb des Hilfsgenerators ausgenutzt werden kann, um auf diese Weise dauerhaft und zuverlässig eine Notstromversorgung sicherzustellen. Insbesondere bei off-shore-Windenergieanlagen, die auch für einen Stromausfall von mehreren Tagen oder Wochen ausgelegt sein müssen, erlaubt der Hilfsgenerator eine zuverlässige Energieversorgung. Um die Windenergieanlage dauerhaft in dem Betriebsmodus zu halten, versorgt der Hilfsgenerator eine Steuerung für die Rotorblattverstellung und mindestens einen Motor zur Verstellung des Anstellwinkels des Rotorblatts. Bei dieser Ausgestaltung ermöglicht der Hilfsgenerator im Trudelbetrieb auch eine Steuerung des Anstellwinkels von mindestens einem Rotorblatt, so dass im Ergebnis ein gesteuerter oder geregelter Betrieb der Windenergieanlage im Trudelbetrieb erfolgt. Die Anstellwinkel des Rotorblatts werden von der Steuerung angesteuert, um eine Drehzahl zu erhalten für die der Hilfsgenerator ausgelegt ist. Die Steuerung steuert und/oder regelt den Anstellwinkel von mindestens einem Rotorblatt, um den Hilfsgenerator dauerhaft bei einer niedrigen Drehzahl zu betreiben. Bevorzugt ist jedes Rotorblatt mit jeweils einem Motor zur Verstellung des Anstellwinkels ausgerüstet, wobei jeder der Motoren von dem Hilfsgenerator versorgt wird. Diese Ausgestaltung ermöglicht es, den Anstellwinkel sämtlicher Rotorblätter auch im Trudelbetrieb einzustellen und so einen geregelten Trudelbetrieb bei unterschiedlichen Bedingungen zu gewährleisten.

In einer weiteren bevorzugten Ausgestaltung versorgt der Hilfsgenerator eine Steuerung für den Winkel des Maschinenhauses (Azimutwinkel) und einen Azimutantrieb zur Verstellung des Winkels des Maschinenhauses. Bei dieser Ausgestaltung ermöglicht es der Hilfsgenerator während des Trudelbetriebs, das Maschinenhaus und damit den Rotor im Wind auszurichten. Auf diese Weise kann auch die abgeschaltete Windenergieanlage wechselnden Windrichtungen aktiv folgen, so dass die Windenergieanlage auch bei starkem Wind weniger beansprucht wird.

Bei einer bevorzugten Weiterbildung sind Schaltmittel vorgesehen, die den Hilfsgenerator bei fehlender Stromversorgung durch das Netz für einen Antrieb durch den Rotor zuschalten. Bevorzugt sind die Schaltmittel mechanisch, hydraulisch, pneumatisch und/oder elektrisch ausgebildet. In einer möglichen Ausgestaltung ist als Schaltmittel eine mechanische Kupplung vorgesehen, die bei normalem Betrieb der Windenergieanlage geöffnet wird und bei Netzausfall selbsttätig schließt, wobei die Kupplung bevorzugt zeitverzögert schließt, so dass durch die Verzögerung die Drehzahl bereits durch die aus dem Wind heraus gedrehten Rotorblätter vermindert ist.

In einer weiteren Ausgestaltung wird die Kupplung elektrisch und/oder hydraulisch geöffnet und federbetätigt geschlossen. Alternativ ist es möglich, ein fliehkraftbetätigtes Schaltmittel vorzusehen, das bei Überschreiten einer ersten vorbestimmten Drehzahl öffnet und bei Unterschreiten einer zweiten vorbestimmten Drehzahl schließt. Hierbei kann die erste vorbestimmte Drehzahl gleich oder unterschiedlich zu der zweiten vorbestimmten Drehzahl sein.

In einer möglichen Ausgestaltung der erfindungsgemäßen Windenergieanlage ist eine Bremse vorgesehen, die vor dem Zuschalten des Hilfsgenerators betätigt wird, bis eine für den Hilfsgenerator vorgesehene Drehzahl erreicht wurde.

In einer möglichen Ausgestaltung wird der Hilfsgenerator von dem Rotor ständig angetrieben und durch elektrische Schaltmittel eine elektrische Verbindung mit den Verbrauchern erst hergestellt, wenn die vorgesehene Drehzahl für den Hilfsgenerator erreicht wurde.

In einer Weiterführung der vorgenannten Ausgestaltung besitzt das Schaltmittel ein Schütz, das bei Normalbetrieb geöffnet ist und bei Netzausfall bevorzugt zeitverzögert schließt. Ferner besitzt das Schaltmittel zusätzlich einen Gleichrichter, einen Umrichter und/oder einen Wechselrichter, der oder die den von dem Hilfsgenerator erzeugten Strom in einer für den zu versorgenden Verbraucher erforderlichen Weise umwandeln und als Gleich- bzw. Wechselstrom bereitstellen.

Erfindungsgemäß ist der Hilfsgenerator über ein Getriebe mit dem Rotor gekoppelt, wobei vorzugsweise das Getriebe ein Übersetzungsverhältnis besitzt, um den Hilfsgenerator bei einer Umdrehungszahl des Rotors der Windenergieanlage von weniger als 15 Umdrehungen pro Minute zur Erzeugung von elektrischer Energie anzutreiben. Beispielsweise ist das Übersetzungsverhältnis für einen Drehzahlbereich des Hilfsgenerators von zwei bis acht Umdrehungen pro Minute ausgelegt. Weiter bevorzugt ist der Hilfsgenerator so ausgelegt, dass bei einem Übersetzungsverhältnis für Drehzahlen von vier bis sechs Umdrehungen pro Minute eine ausreichende Bereitstellung von elektrischer Energie durch diesen erfolgt. Zukünftige Windenergieanlagen mit sehr großem Durchmesser können auch bei deutlich geringeren Drehzahlen mit dem Hilfsgenerator Strom erzeugen.

Der Hilfsgenerator besitzt bevorzugt eine selbst- oder permanenterregte Bauform. Alternativ kann ein Generator mit Fremderregung verwendet werden, für den die Erregungsleistung aus einem Energiespeicher, beispielsweise Akkumulator, bereitgestellt wird. Zusätzlich ist in einer zweckmäßigen Weiterführung mindestens ein Akkumulator in der Windenergieanlage vorgesehen, der eine unterbrechungsfreie Stromversorgung sicherstellt, wobei der Akkumulator von dem Hilfsgenerator versorgt und insbesondere bei Netzausfall wieder aufgeladen wird. Ebenfalls ist es möglich, den Generator derart auszubilden, dass dieser durch Schaltmittel als Hilfsgenerator betrieben werden kann.

Die erfindungsgemäße Aufgabe wird ebenfalls durch ein Verfahren zur Steuerung einer Windenergieanlage gelöst. Die Windenergieanlage besitzt mindestens ein Rotorblatt, das in seinem Anstellwinkel um seine Längsachse verstellbar ist. Das Verfahren ist durch einen Betriebsmodus gekennzeichnet, in dem das Rotorblatt mit einer gegenüber dem regulären Betrieb verminderten Drehzahl sich dreht. Vorzugsweise besitzt das Rotorblatt, wie bereits erwähnt, eine Drehzahl von wenigen Umdrehungen pro Minute, während im Normalbetrieb eine Drehzahl von 15 bis 20 Umdrehungen pro Minute vorliegt. Der für diesen Drehzahlbereich ausgelegte Hilfsgenerator erzeugt elektrische Leistung, die an einer Steuerung für den Anstellwinkel des Rotorblatts anliegt. Die Steuerung stellt den Anstellwinkel des Rotorblatts derart, daß die Windenergieanlage dauerhaft in dem Betriebsmodus mit der verminderten Drehzahl betrieben wird. Hierbei versorgt der Hilfsgenerator die Steuerung und einen Antrieb zur Verstellung der Rotorblätter. Die Verstellung des Anstellwinkels kann hierbei geregelt oder gesteuert erfolgen.

Die vorliegende Erfindung wird nachfolgend anhand der Zeichnungen näher erläutert.

Es zeigt:
- Figur 1: eine schematische Ansicht des Triebstrangs einer erfindungsgemäßen Windenergieanlage und
- Figur 2: ein Blockschaltbild mit den wesentlichen durch den Hilfsgenerator zu versorgenden Komponenten der Windenergieanlage.

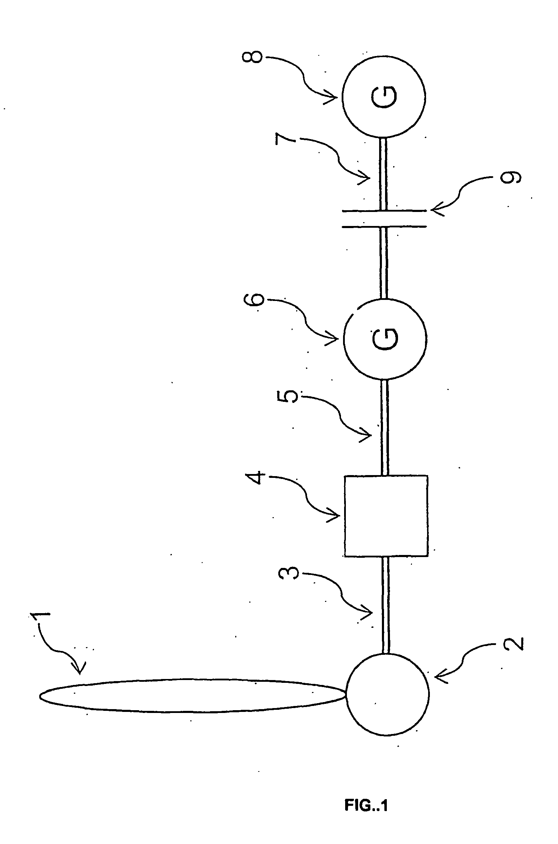

Figur 1 zeigt eine schematische Ansicht eines Triebstrangs einer Windenergieanlage, mit einem Rotorblatt 1, das in einer Rotornabe 2 verstellbar gelagert ist. Die Rotorwelle 3 mündet in einem Getriebe 4, dessen Abgangswelle die Generatorwelle 5 für den Generator 6 bildet. Im Normalbetrieb besitzt die Windenergieanlage eine Drehzahl von beispielsweise ungefähr 15-20 Umdrehungen pro Minute, die durch das Getriebe 4 in eine geeignete Drehzahl für den Generator 6 umgesetzt wird. Selbstverständlich existieren auch getriebelose Antriebsstränge.

An einer Abgangswelle des Generators 6 ist eine selbsttätige Kupplung 9 vorgesehen, die mit einer Generatorwelle 7 eines Hilfsgenerators 8 verbunden ist.

Der dargestellte Antriebsstrang arbeitet wie folgt: Bei einem Ausfall des Netzstroms, werden durch einen Hilfsmotor, der von einem Generator oder einem Energiespeicher (nicht dargestellt) gespeist wird, die Rotorblätter in die Fahnenstellung gedreht. Hierdurch geht die Windenergieanlage in den Trudelbetrieb über, bei dem der Rotor eine Drehzahl von ungefähr vier bis sechs Umdrehungen pro Minute besitzt. Ist die Drehzahl ungefähr erreicht, schließt die Kupplung 9, so dass der Hilfsgenerator 8 durch den Rotor angetrieben wird. Die durch den Hilfsgenerator 8 bereitgestellte elektrische Leistung, in der Größenordnung von einigen Kilowatt, reicht aus, die beim Stromausfall benötigten Komponenten der Windenergieanlage, wie beispielsweise Steuerung, Windsensoren, Pitch- und Azimutsystem, Hydrauliksystem, Signaleinrichtung, Gefahrfeuer für See- und Luftfahrt und dergleichen zu versorgen. Wie nachfolgend noch beschrieben wird, erlaubt die von dem Hilfsgenerator 8 bereitgestellte Energie sogar eine Steuerung oder Regelung des Trudelbetriebs.

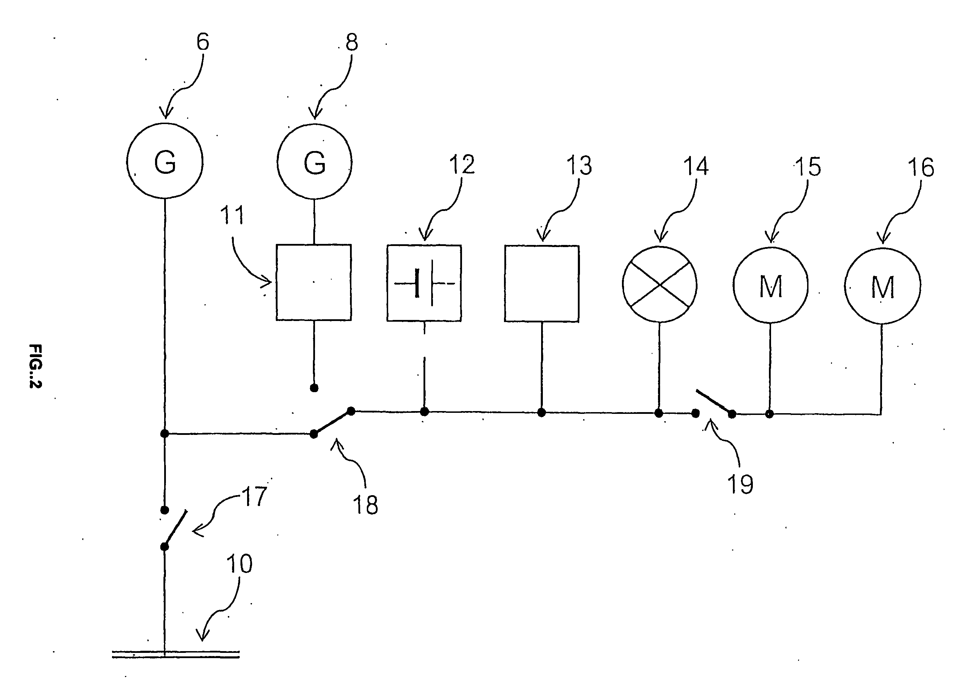

Figur 2 zeigt in einem Blockschaltbild die Anschlüsse der Windenergieanlage. Im Normalbetrieb wird die am Generator 6 erzeugte elektrische Leistung über den geschlossenen Schalter 17 in das Netz eingespeist. Die elektrischen Verbraucher, wie beispielsweise die Steuerung 13, die Signaleinrichtungen und Gefahrfeuer 14, sowie das Azimutsystem 15 und das Pitchsystem 16 werden vom Netz - beziehungsweise von dem Generator 6 - mit elektrischer Leistung versorgt.

Wenn die Windenergieanlage, beispielsweise infolge eines Ausfalls des Stromnetzes, vom Netz getrennt werden muß, öffnet Schalter 17. In diesem Fall übernimmt die unterbrechungsfreie Stromversorgung 12 für kurze Zeit die Versorgung der Verbraucher, insbesondere der Steuerung 13 und der Signaleinrichtungen und Gefahrfeuer 14. Außerdem werden durch die Pitchantriebe, die Bestandteil des Pitchsystems 16 sind, die Rotorblätter in die Fahnenstellung gestellt. Die dazu erforderliche Energie wird Energiespeichern entnommen, die ebenfalls Bestandteil des Pitchsystems 16 sind. Durch das Verdrehen der Rotorblätter in die Fahnenposition verringert sich die Drehzahl des Rotors. Bei geeigneter Drehzahl wird Schalter 18 umgelegt und die von dem Hilfsgenerator 8 erzeugte elektrische Leistung wird über einen Umrichter 11 in geeigneten Wechselstrom für die Verbraucher umgewandelt. Hierdurch kann die unterbrechungsfreie Stromversorgung 12 wieder aufgeladen, die Steuerung 13 erforderlichenfalls wieder in Betrieb genommen und Steueraufgaben übernommen werden, ferner können die Signaleinrichtungen und Gefahrfeuer 14 betrieben werden. Weiterhin erfolgt bei normalerweise geschlossenem Schalter 19 eine Versorgung des Azimutsystems 15 und des Pitchsystems 16.

Selbstverständlich kann auf einen Umrichter 11 verzichtet werden, wenn die Komponenten 12... 16 der Windenergieanlage für einen Betrieb unmittelbar mit dem von dem Hilfsgenerator 8 erzeugten Strom geeignet sind.

Durch den Hilfsgenerator 8 werden wenigstens die Versorgung der Steuerung 13 der Windenergieanlage und des Pitchsystems 16 sowie die Versorgung mindestens eines Pitchantriebs sichergestellt, so dass mindestens ein Rotorblatt in der Windenergieanlage auf eine von der Fahnenstellung abweichende Position gestellt werden kann. Bei einer Steuerung im Trudelbetrieb wird das Rotorblatt derart eingestellt, dass die Drehzahl des Rotors sich in einem solchen Bereich befindet, dass an der Generatorwelle 7 eine für den Betrieb des Hilfsgenerators 8 besonders günstige Drehzahl auftritt, beispielsweise 400-500 Umdrehungen pro Minute. Auf diese Weise kann der Trudelbetrieb kontrolliert und eine gleichmäßige Bereitstellung von Energie erreicht werden.

Durch den Hilfsgenerator 8 können wenigstens die Steuerung 13 der Windenergieanlage und des Azimutsystems, die Windsensoren, die Azimutantriebe und - sofern vorhanden - das Hydrauliksystem mit Energie versorgt werden. Durch die Windsensoren wird insbesondere die Windrichtung bestimmt, so dass die Steuerung 13 eine Eingangsgröße erhält, in welcher Richtung ein Nachführen der Windenergieanlage erforderlich ist. Das Hydrauliksystem muß mit Energie versorgt werden, wenn die Windenergieanlage mit Azimutbremsen ausgestattet ist, die beim Nachführen der Windenergieanlage hydraulisch gelüftet werden müssen. Hierdurch wird es möglich, die Windenergieanlage bei drehendem Wind nachzuführen und so einzustellen, dass möglichst geringe Lasten auf sie einwirken. Insbesondere wird die Windenergieanlage so eingestellt, dass der Rotor in Richtung des Windes weist.

Bei Eintritt einer Windstille ist eine Versorgung durch den Hilfsgenerator 8 nicht mehr möglich. In diesem Fall ist noch eine Versorgung der Steuerung 13 und der Signaleinrichtungen und Gefahrfeuer 14 erforderlich, die von der unterbrechungsfreien Stromversorgung 12 übernommen wird. Ein Betrieb des Azimutsystems 15 und des Pitchsystem 16 ist dann nicht erforderlich und diese Komponenten werden durch Öffnen des Schalters 19 von der Versorgung getrennt.

Die Steuerung 13 ist über (nicht dargestellte) Steuerleitungen, ein lokales Kommunikationsnetz oder andere Verbindungsmittel mit den übrigen Komponenten der Windenergieanlage verbunden, um diese zu steuern und um Betriebs- und Meßwerte von diesen zu erhalten.

Sicherheitsrichtlinien für moderne Windenergieanlagen fordern, dass die abgeschaltete Windenergieanlage bei Netzausfall einen Sturm bestimmter Stärke mit wechselnder Windrichtung unbeschadet übersteht. Wenn die Windenergieanlage der wechselnden Windrichtung aktiv folgen kann, so kann diese für den dimensionierenden Lastfall mit erheblicher Materialeinsparung an verschiedenen Komponenten ausgelegt werden und es besteht eine größere Wahrscheinlichkeit, dass die Windenergieanlage extreme Windbedingungen unbeschadet übersteht.

## Patentansprüche

1. Windenergieanlage mit
- einem Rotor
- einem Generator (6) zur Erzeugung elektrischer Energie,
- mindestens einem drehbar gelagerten Rotorblatt (1), das zur Verstellung des Anstellwinkels um seine Längsachse verstellbar ist,
- einer Steuerung für die Rotorblattverstellung, und
- einem Hilfsgenerator (8) zur Erzeugung elektrischer Energie für mindestens einen Verbraucher (12, 13, 14, 15, 16), wobei
- der Hilfsgenerator (8) über ein Getriebe (4) mit dem Rotor gekoppelt ist und in einem Drehzahlbereich des Rotors mit einer im Vergleich zum Normalbetrieb niedrigeren Drehzahl elektrische Energie für die Steuerung für die Rotorblattverstellung und für einen Antrieb zur Verstellung des Anstell-winkels von dem mindestens einem Rotorblatt erzeugt, **dadurch gekennzeichnet, dass** die Steuerung den Anstellwinkel für einen dauerhaften Betrieb in dem Drehzahlbereich steuert oder regelt.

2. Windenergieanlage nach Anspruch 1, **dadurch gekennzeichnet, dass** jedes Rotorblatt mit jeweils einem Antrieb zur Verstellung des Anstellwinkels versehen ist, der jeweils von dem Hilfsgenerator (8) versorgt werden kann.

3. Windenergieanlage nach einem der Ansprüche 1 oder 2, **dadurch gekennzeichnet, dass** eine Steuerung für den Winkel des Maschinenhauses und ein Azimutantrieb zur Verstellung der Ausrichtung des Maschinenhauses mit dem Rotor vorgesehen ist, wobei der Azimutantrieb durch den Hilfsgenerator (8) mit Energie versorgt wird.

4. Windenergieanlage nach einem der Ansprüche 1 bis 3, **dadurch gekennzeichnet, dass** Schaltmittel vorgesehen sind, die den Hilfsgenerator für den Antrieb durch den Rotor bei fehlender Stromversorgung durch das Netz zuschalten.

5. Windenergieanlage nach Anspruch 4, **dadurch gekennzeichnet, dass** die Schaltmittel mechanisch, hydraulisch, pneumatisch und/oder elektrisch ausgebildet sind.

6. Windenergieanlage nach Anspruch 5, **dadurch gekennzeichnet, dass** als Schaltmittel eine Kupplung (9) vorgesehen ist, die bei normalem Betrieb geöffnet ist und bei Netzausfall selbsttätig schließt.

7. Windenergieanlage nach Anspruch 6, **dadurch gekennzeichnet, dass** die Kupplung (9) zeitverzögert schließt.

8. Windenergieanlage nach Anspruch 6 oder 7, **dadurch gekennzeichnet, dass** die Kupplung (9) bei normalem Betrieb mechanisch, pneumatisch, elektrisch und/oder hydraulisch geöffnet wird.

9. Windenergieanlage nach Anspruch 6 oder 7, **dadurch gekennzeichnet, dass** die Kupplung bei Überschreiten einer ersten vorbestimmten Drehzahl selbsttätig öffnet und bei Unterschreiten einer zweiten vorbestimmten Drehzahl selbsttätig schließt.

10. Windenergieanlage nach Anspruch 9, **dadurch gekennzeichnet, dass** die erste vorbestimmte Drehzahl gleich der zweiten vorbestimmten Drehzahl ist.

11. Windenergieanlage nach Anspruch 9, **dadurch gekennzeichnet, dass** die zweite vorbestimmte Drehzahl ungefähr der Drehzahl für den Hilfsgenerator (8) entspricht.

12. Windenergieanlage nach einem der Ansprüche 5 bis 11, **dadurch gekennzeichnet, dass** eine Bremse vorgesehen ist, die vor dem Zuschalten des Hilfsgenerators betätigt wird, bis eine für den Hilfsgenerator vorgesehene Drehzahl erreicht wurde.

13. Windenergieanlage nach einem der Ansprüche 1 bis 12, **dadurch gekennzeichnet, dass** der Hilfsgenerator (8) während eines Normalbetriebs von dem Rotor angetrieben und eine elektrische Verbindung mit den Verbrauchern (12, 13, 14, 15, 16) hergestellt wird, wenn die vorgesehene Drehzahl für den Hilfsgenerator erreicht wurde.

14. Windenergieanlage nach Anspruch 13, **dadurch gekennzeichnet, dass** das Schaltmittel ein Schütz aufweist, das bei normalem Betrieb geöffnet ist und bei Netzausfall schließt.

15. Windenergieanlage nach Anspruch 14, **dadurch gekennzeichnet, dass** das Schütz zeitverzögert schließt.

16. Windenergieanlage nach einem der Ansprüche 13 bis 15, **dadurch gekennzeichnet, dass** das Schaltmittel zusätzlich einen, Gleichrichter, Umrichter und/oder Wechselrichter aufweist.

17. Windenergieanlage nach einem der Ansprüche 1 bis 16, **dadurch gekennzeichnet, dass** der Hilfsgenerator (8) eine selbst- oder permanenterregte Bauform besitzt.

18. Windenergieanlage nach einem der Ansprüche 1 bis 16, **dadurch gekennzeichnet, dass** der Hilfsgenerator (8) eine fremderregte Bauform besitzt.

19. Windenergieanlage nach einem der Ansprüche 1 bis 16, **dadurch gekennzeichnet, dass** der Generator (6) Schaltmittel aufweist, die in einem geschalteten Zustand den Betrieb des Generators (6) als Hilfsgenerator zulassen.

20. Windenergieanlage nach einem der Ansprüche 1 bis 19, **dadurch gekennzeichnet, dass** zusätzlich mindestens ein Akkumulator für eine unterbrechungsfreie Stromversorgung vorgesehen ist, der als Verbraucher von dem Hilfsgenerator versorgt wird.

21. Verfahren zur Steuerung einer Windenergieanlage mit einem Rotor, der mindestens ein Rotorblatt aufweist, das in seinem Anstellwinkel um seine Längsachse verstellbar ist, **gekennzeichnet durch**:
- einen Betriebsmodus mit einer gegenüber einem Normalbetrieb verminderten Drehzahl, in dem ein Hilfsgenerator elektrische Leistung erzeugt, wobei der Hilfsgenerator (8) über ein Getriebe (4) mit dem Rotor gekoppelt ist, und
- eine Steuerung, die den Anstellwinkel des Rotorblatts für einen dauerhaften Betrieb des Hilfsgenerators mit der verminderten Drehzahl verstellt, wobei mindestens die Steuerung und ein Antrieb zur Verstellung des Rotorblatts von dem Hilfsgenerator versorgt werden.

## Claims

1. A wind power installation comprising
- a rotor
- a generator (6) for generating electric power,
- at least one rotatably mounted rotor blade (1) displaceable about its longitudinal axis for adjusting the angle of attack,
- a controller for the rotor blade adjustment, and
- an auxiliary generator (8) for generating electric power for at least one consumer (12, 13, 14, 15, 16), wherein
- the auxiliary generator (8) is coupled to the rotor by means of a drive (4) and produces electricity for the controller for the rotor blade adjustment and for a drive for adjusting the angle of attack of at least one rotor blade at a lower range of rotational speed in comparison to the rotational speed in normal operation, **characterized in that** the controller for the angle of attack is controlled or regulated for sustained operation in the range of the rotational speed.

2. A wind power installation according to claim 1, **characterized in that** each rotor blade is provided with one drive each for adjusting the angle of attack, each of which can be supplied by the auxiliary generator (8).

3. A wind power installation according to any one of claims 1 or 2, **characterized in that** a controller for the angle of the machine gondola and an azimuth drive for adjusting the orientation of the machine gondola with the rotor is provided, wherein the azimuth drive is supplied with power by the auxiliary generator (8).

4. A wind power installation according to any one of claims 1 to 3, **characterized in that** switching means are provided which switch on the auxiliary generator for actuation by the rotor in the event of a network power supply outage.

5. A wind power installation according to claim 4, **characterized in that** the switching means (9) are of mechanical, hydraulic, pneumatic and/or electrical configuration.

6. A wind power installation according to claim 5, **characterized in that** a coupler (9) which is opened in normal operation and which closes automatically in the event of power failure is provided as said switching means.

7. A wind power installation according to claim 6, **characterized in that** the coupler (9) closes in time-delayed manner.

8. A wind power installation according to any one of claims 6 or 7, **characterized in that** the coupler (9) is opened mechanically, pneumatically, electrically and/or hydraulically in normal operation.

9. A wind power installation according to any one of claims 6 or 7, **characterized in that** the coupler opens automatically upon the exceeding of a first predefined rotational speed and closes automatically upon falling below a second predefined rotational speed.

10. A wind power installation according to claim 9, **characterized in that** the first predefined rotational speed is equal to the second predefined rotational speed.

11. A wind power installation according to claim 9, **characterized in that** the second predefined rotational speed corresponds approximately to the rotational speed for the auxiliary generator (8).

12. A wind power installation according to any one of claims 5 to 11, **characterized in that** a brake is provided which is applied prior to the auxiliary generator switching on until a rotational speed specified for the auxiliary generator is reached.

13. A wind power installation according to any one of claims 1 to 12, **characterized in that** the auxiliary generator (8) is driven by the rotor during normal operation and an electrical connection with the consumers (12, 13, 14, 15, 16) is produced when the rotational speed specified for the auxiliary generator is reached.

14. A wind power installation according to claim 13, **characterized in that** the switching means comprises a contactor which is open during normal operation and which closes upon power failure.

15. A wind power installation according to claim 14, **characterized in that** the contactor closes in a time-delayed manner.

16. A wind power installation according to any one of claims 13 to 15, **characterized in that** the switching means additionally comprises a rectifier, converter and/or inverter.

17. A wind power installation according to any one of claims 1 to 16, **characterized in that** the auxiliary generator (8) is of self-excited or permanently-excited configuration.

18. A wind power installation according to any one of claims 1 to 16, **characterized in that** the auxiliary generator (8) is of separate-excited configuration.

19. A wind power installation according to any one of claims 1 to 16, **characterized in that** the generator (6) comprises switching means which allows operation of the generator (6) as an auxiliary generator in a connected state.

20. A wind power installation according to any one of claims 1 to 19, **characterized in that** at least one accumulator is additionally provided for an uninterruptible power supply which the auxiliary generator supplies as a consumer.

21. A method for the control of a wind power installation having a rotor which has at least one rotor blade, the angle of attack of which is adjustable about its longitudinal axis, **characterized by**:
- a mode of operation at a slower rotational speed compared to normal operation at which an auxiliary generator generates electrical power, wherein the auxiliary generator (8) is coupled to the rotor by means of a drive (4), and
- a controller which adjusts the angle of attack of the rotor blade for a sustained operation of the auxiliary generator at the reduced rotational speed, wherein at least the controller and one drive for adjusting the rotor blade are supplied by the auxiliary generator.

## Revendications

1. Installation éolienne comprenant
- un rotor,
- un générateur (6) pour produire de l'énergie électrique,
- au moins une pale de rotor logée à rotation (1) qui peut être déplacée autour de son axe longitudinal pour le réglage de l'angle d'incidence,
- une commande pour le déplacement de la pale de rotor, et
- un générateur auxiliaire (8) pour produire de l'énergie électrique pour au moins un consommateur (12, 13, 14, 15, 16), dans laquelle
- le générateur auxiliaire (8) est raccordé au rotor par le biais d'un engrenage (4) et produit de l'énergie électrique pour la commande pour le déplacement de la pale de rotor et pour un entraînement pour le réglage de l'angle d'incidence de l'au moins une pale de rotor dans une plage de vitesse de rotation du rotor avec une vitesse de rotation inférieure par rapport au fonctionnement normal, **caractérisée en ce que** la commande commande ou régule l'angle d'incidence pour un fonctionnement durable dans la plage de vitesse de rotation.

2. Installation éolienne selon la revendication 1, **caractérisée en ce que** chaque pale de rotor est pourvue d'un entraînement pour le réglage de l'angle d'incidence qui peut à chaque fois être alimenté par le générateur auxiliaire (8).

3. Installation éolienne selon l'une quelconque des revendications 1 ou 2, **caractérisée en ce qu'**une commande est prévue pour l'angle de la centrale et un entraînement azimutal est prévu pour le réglage de l'orientation de la centrale avec le rotor, l'entraînement azimutal étant alimenté en énergie par le générateur auxiliaire (8).

4. Installation éolienne selon l'une quelconque des revendications 1 à 3, **caractérisée en ce que** des moyens de commutation, qui raccordent le générateur auxiliaire à travers le réseau pour l'entraînement par le rotor en cas d'absence d'alimentation électrique, sont prévus.

5. Installation éolienne selon la revendication 4, **caractérisée en ce que** les moyens de commutation sont réalisés de manière mécanique, hydraulique, pneumatique et/ou électrique.

6. Installation éolienne selon la revendication 5, **caractérisée en ce qu'**un dispositif d'accouplement (9), qui est ouvert en fonctionnement normal et se ferme automatiquement en cas de panne de secteur, est prévu en tant que moyen de commutation.

7. Installation éolienne selon la revendication 6, **caractérisée en ce que** le dispositif d'accouplement (9) se ferme de manière retardée dans le temps.

8. Installation éolienne selon la revendication 6 ou 7, **caractérisée en ce que** le dispositif d'accouplement (9) est ouvert de manière mécanique, pneumatique, électrique et/ou hydraulique en fonctionnement normal.

9. Installation éolienne selon la revendication 6 ou 7, **caractérisée en ce que** le dispositif d'accouplement s'ouvre automatiquement en cas de dépassement d'une première vitesse de rotation prédéterminée et se ferme automatiquement en cas de dépassement par le bas d'une seconde vitesse de rotation prédéterminée.

10. Installation éolienne selon la revendication 9, **caractérisée en ce que** la première vitesse de rotation prédéterminée est égale à la seconde vitesse de rotation prédéterminée.

11. Installation éolienne selon la revendication 9, **caractérisée en ce que** la seconde vitesse de rotation prédéterminée correspond approximativement à la vitesse de rotation pour le générateur auxiliaire (8).

12. Installation éolienne selon l'une quelconque des revendications 5 à 11, **caractérisée en ce qu'**un frein, qui est actionné avant le raccordement du générateur auxiliaire jusqu'à ce qu'une vitesse de rotation prévue pour le générateur auxiliaire ait été atteinte, est prévu.

13. Installation éolienne selon l'une quelconque des revendications 1 à 12, **caractérisée en ce que** le générateur auxiliaire (8) est entraîné par le rotor pendant un fonctionnement normal et une connexion électrique est réalisée avec les consommateurs (12, 13, 14, 15, 16) lorsque la vitesse de rotation prévue pour le générateur auxiliaire a été atteinte.

14. Installation éolienne selon la revendication 13, **caractérisée en ce que** le moyen de commutation présente un contacteur-disjoncteur qui est ouvert en fonctionnement normal et se ferme en cas de panne de secteur.

15. Installation éolienne selon la revendication 14, **caractérisée en ce que** le contacteur-disjoncteur se ferme de manière retardée dans le temps.

16. Installation éolienne selon l'une quelconque des revendications 13 à 15, **caractérisée en ce que** le moyen de commutation présente en outre un redresseur, un mutateur et/ou un onduleur.

17. Installation éolienne selon l'une quelconque des revendications 1 à 16, **caractérisée en ce que** le générateur auxiliaire (8) possède une forme de construction à excitation automatique ou permanente.

18. Installation éolienne selon l'une quelconque des revendications 1 à 16, **caractérisée en ce que** le générateur auxiliaire (8) possède une forme de construction à excitation séparée.

19. Installation éolienne selon l'une quelconque des revendications 1 à 16, **caractérisée en ce que** le générateur (6) présente des moyens de commutation qui autorisent le fonctionnement du générateur (6) en tant que générateur auxiliaire dans un état commuté.

20. Installation éolienne selon l'une quelconque des revendications 1 à 19, **caractérisée en ce qu'**au moins un accumulateur est en outre prévu pour une alimentation électrique sans interruption, lequel est alimenté en tant que consommateur par le générateur auxiliaire.

21. Procédé de commande d'une installation éolienne comprenant un rotor qui présente au moins une pale de rotor qui peut être déplacée dans son angle d'incidence autour de son axe longitudinal, **caractérisé par** :
- un mode de fonctionnement avec une vitesse de rotation réduite par rapport à un fonctionnement normal, dans lequel un générateur auxiliaire génère de la puissance électrique, le générateur auxiliaire (8) étant raccordé au rotor par le biais d'un engrenage (4), et
- une commande qui règle l'angle d'incidence de la pale de rotor pour un fonctionnement durable du générateur auxiliaire avec la vitesse de rotation réduite, au moins la commande et un entraînement pour le déplacement de la pale de rotor étant alimentés par le générateur auxiliaire.
